# EUROPEAN PATENT SPECIFICATION

(11) **EP 3 667 208 B1**
(45) Date of publication and mention of the grant of the patent: **15.05.2024**
(21) Application number: 19211317.3
(22) Date of filing: 25.11.2019
(51) Int. Cl.: F25D 13/06, A23B 4/00, B65B 25/06, F25D 3/11

(54) **PROCESS FOR SHELF-LIFE EXTENSION OF FISH**
VERFAHREN FÜR VERBESSERTE HALTBARKEIT VON FISCH
PROCÉDÉ POUR ALLONGER LA DURÉE DE CONSERVATION DE POISSON

(30) Priority: 14.12.2018 EP 18212755
(43) Date of publication of application: 17.06.2020
(73) Proprietor: Keohane Seafood Unlimited Company, Cork (IE)
(72) Inventor: KEOHANE, Michael, Cork, (IE); O'LEARY, Elizabeth, Cork, (IE)
(74) Representative: Weldon O'Brien Ltd.

(56) References cited:
- EP-A1- 1 731 430
- WO-A1-97/39951
- WO-A2-2020/028462
- GB-A- 1 077 644
- GB-A- 2 446 708
- US-A- 5 256 434
- US-A- 5 992 173
- US-A1- 2016 073 648

## Description

### INTRODUCTION

### Field of the Invention

The invention relates to a process for treating and packaging fresh fish, with the aim to increase the shelf life of the product.

Currently, fish which has been vacuum packed and conventionally chilled can have a shelf life of up to several days, whilst retaining its freshness.

US2002012724 describes a process for filleting and treating fish.

JPH0838035 describes a method for carrying out dehydration, packing, chilled refrigeration, processing and transportation of fresh fish.

CA998973 describes a method of chilling fish, in which there is super-chilling, to provide a product in which chilled fish portions are stored in an insulated carton that can be formed from polystyrene, and the top section of the carton is snowed with dry ice over a membrane which prevents the fish portions from freezer-burn.

GB 1029550 describes a method of preserving chicken products by deep chilling.

US5256434 describes cryogenically freezing crab meat with liquid nitrogen.

EP1731430 describes preservation of fish meat with an oxygen-controller environment followed by freezing to -60° to -70°C.

WO97/39951 describes flash freezing seafood followed by microwave cooking.

GB2446708 describes packing fresh fish meat using a mixture of gases to create a modified atmosphere.

US5992173 describes a chiller apparatus with two chambers.

WO2020/028462 describes use of an oxygen permeable film pouch to provide a modified atmosphere. US 2016/073648 A1 describes a process suitable for packaging fish in which liquid nitrogen is used as cooling means.

The invention is directed towards extending the shelf life of fish, whilst retaining the freshness of the produce. Particularly, the invention is directed towards providing an improved process of preparing a fish product with a long shelf life, preferably up to about 12 days, with the ability to ship the product in a consumer-friendly package in which the product is presented in a manner which is visible and ready for sale.

### SUMMARY OF THE INVENTION

The invention is as set out in the attached claims.

We describe process for treating and packaging fish as set out in claim 1.

Preferably, for step (c) the fish is transferred to a fileting stage from the chill room, wherein the fish is fileted in said fileting stage in a room environment temperature of less than or equal to 8°C. Preferably, for step (c) the fish is transferred to a portioning stage from the fileting stage, wherein the fish is portioned in a portioning stage room environment temperature of less than or equal to 8°C.

The super-chilling of step (f) is implemented by delivering air in the range of -25°C to -30°C to the fish for a cycle time of approximately 60 minutes. Preferably, the super-chill air is delivered at approximately -28°C.

Preferably, the super-chill stage is implemented in a spiral chilling chamber, having a closed environment within which air is circulated vertically through a spiral-mesh open conveyor holding the packages and is cooled by a heat exchanger which draws air in and delivers it between heat exchanger or evaporator plates. Preferably, the coolant for the heat exchanger or evaporator coolant is ammonia, and the coolant temperature is in the range of -30°C to -38°C. According to the invention, the packages are super-chilled in order to reach a fish core temperature in the range of -4°C to -2°C. Preferably, for step (f) the cooling air flow rate is in the range of 2.5m/s to 4.0 m/s. Preferably, the chill hold environment temperature of step (g) is approximately -4°C.

Preferably, for step (g) the packages are held in the holding room for approximately 20 to 30 hours. We also describe a fish package product whenever produced by a process of any preceding claim.

### DETAILED DESCRIPTION OF THE DRAWINGS

### Brief Description of the Drawings

The invention will be more clearly understood from the following description of some embodiments thereof, given by way of example only with reference to the accompanying drawings in which:
Fig. 1 is a flow diagram of the process of the invention;
Fig. 2 is a side view of a vacuum skin packed fish portion;
Fig. 3 is a diagrammatic view showing the super-chilling process in more detail,
Fig. 4 is a plot showing core product temperature during super-chilling; and
Fig. 5 is a plot of Total Viable Colony Forming Units (TVC) for sample salmon products, illustrating shelf life arising from the described process.

### Detailed Description

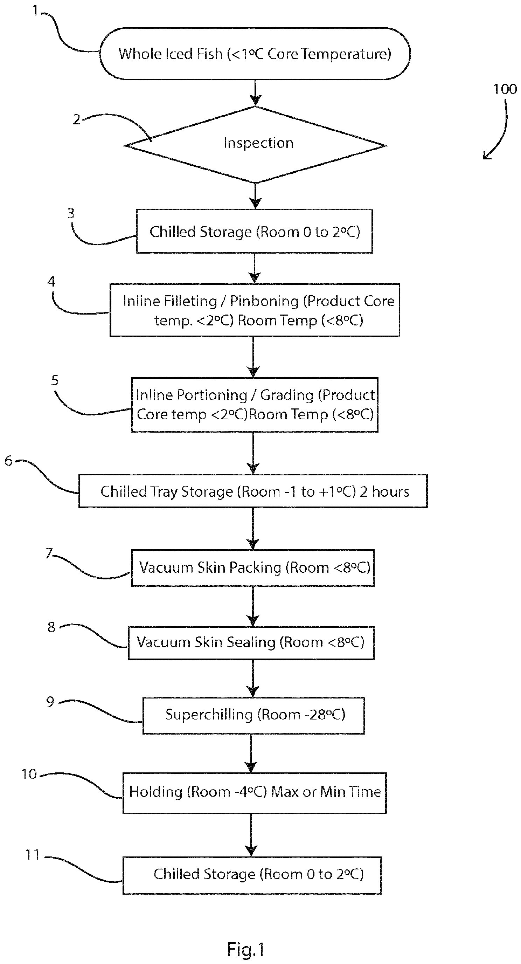

Referring to Fig. 1, a flow chart of a process 100 of the invention is illustrated. The process 100 has an initial stage 1 whereby whole iced fish is received in the process factory; at this stage the fish has a core temperature of less than 1°C. The fish is then weighed and inspected in stage 2 of the process. The fish is quality checked for colour, size and freshness. Freshness it detected by an organoleptic meter, in this case of the type known as a "Torrymeter".

The fish which has passed the quality checks is subsequently transferred to chilled storage in stage 3 of the process. In this stage the room temperature is 0°C to 2°C and the produce is temporarily stored here.

Following this, the fish is transferred to a filleting area 4, where the fish is filleted, washed and trimmed to specification. This may include the fish being pin boned, inspected, washed and packed into blue food grade liners. The fish is then transferred to a portioning stage 5. During the portioning stage 5 the fish is cut into the relevant portions with sizes required for sale. Each of the darns or portions are automatically weighed and graded for sale. The room temperature is less than or equal to 8°C and the core temperature of the fish is less than 2°C for both the fileting and portioning stages.

The portions are then placed on production handling trays and transferred to a chilled storage room 6 which is at a temperature of approximately -1°C to +1°C for a minimum of 2 hours. This is a wait zone before the fish is vacuum skin packed in stages 7 and 8.

In stage 7, the one or more of portions are placed in a thermoformed tray, and covered immediately with a layer of skin film to provide a fish package. The thermoformed tray may consist of an EVOH layer and/or A-PET PE material. The skin film comprises a base web and a top layer web of EVOH top layer A-PET material; the base web is approximately 300 µm to 500 µm in thickness and the top web is approximately 80 µm to 120µm in thickness. Air is substantially removed between the thermoform tray and the skin seal so as to create a vacuum, to an extent of less than 5mBar pressure. This is carried out within 10 minutes of leaving the chill room.

In stage 8, the thermoformed tray and skin film are subsequently sealed to complete the vacuum skin packaging of the fish portions to provide the packages.

This results in a vacuum skin-sealed package containing the individual fish product, as it would be viewed by the end customer, to be sold as an individual product. The process as described below achieves treatment of this fish package product in a manner allowing it to leave the factory and be shipped to a retail destination, which may be overseas, with a shelf life of up to 12 days. This is achieved without need to contain the product in an insulating container in the retail environment. Moreover, it is achieved in a manner which does not require additional handling insulation and chilling procedures for shipment in addition to what is conventional.

The environment or room temperature for stages 7 and 8 is less than or equal to 8°C. This temperature level is important as it is a requirement for employees to have a level of comfort for working in, without affecting the core temperature of the fish.

Stage 8 is performed directly after stage 7 and both stages can be performed together in the one machine.

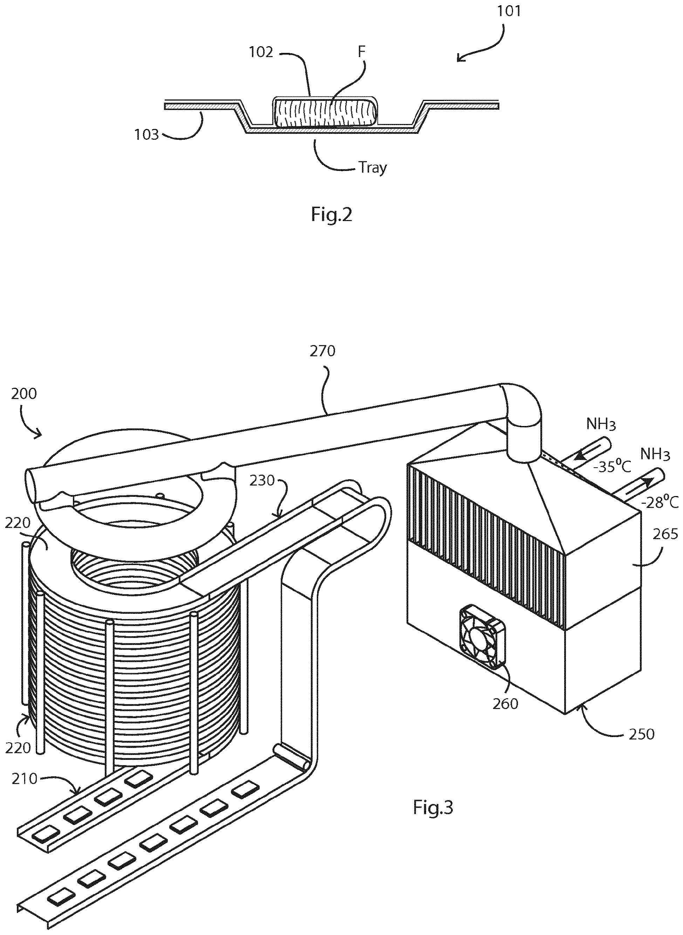

Referring to Fig. 2, an example package 101 is shown in side profile. The skin film 102 vacuum surrounds the fish portion F, flush to the edges of the fish portion and without any gaps, and is sealed to the tray 103.

The fish core temperature during the stages 7 and 8 is approximately 4°C. The fish core temperature is maintained substantially constant during the packaging stages 7 and 8.

Before the skin film is applied, marinades or sauces may be added to the fish if required.

Following the completion of the vacuum skin packing of the fish, each package is lead straight and transferred to a super-chilling stage in step 9. In the super-chilling stage 9, the packaged fish is chilled using forced air flow at an air temperature of approximately -28°C for a cycle time of approximately 60 mins in total with the end point to achieve a fish core temperature of -2°C to - 4°C. Preferably, the fish core temperature should not decrease below -4°C as this would cause excessive crystals to form. The fish product can have up to approximately 30% crystals, having crystals in excess of this is not advantageous. The duration of super-chilling is in the range of 45 mins to 180 mins, but the upper end of this range would only be required where the fish product is large, in excess of 1kg. Typically, and preferably, the time for super-chilling is in the range of 50 mins to 80 mins for most fish product sizes.

Referring to Fig. 3, the super-chilling of the packages is achieved by spiral chilling using an apparatus 200. An inlet wire conveyor 210 enters and moves through a spiral configuration or path 220 with approximately 40 levels, and the outlet conveyor 230 delivers the chilled fish packages to a delivery area, not shown. The packages are vacuum skin sealed as shown, and are placed on the conveyor at a spacing of about 50:50 with the gaps being approximately equal to the longitudinal dimension of the products. The chilling is implemented by a heat exchanger 250 having a fan inlet 260 which draws in air within the (sealed) room and forces it upwardly through plate heat exchanger elements 265 which carry ammonia (NH₃) coolant. The coolant enters at about -35°C and exits at the air outlet temperature of about -28°C. The flow rate of the fan inlet 260 and the flow rates and the temperature of the ammonia (NH₃) coolant are calibrated so as to deliver air at a temperature of -28°C at 3.5 metres per second. The cooled air is directed upwardly and across within the confines of the room and downwardly through the spiral paths, being able to pass through the conveyor mesh turns due to the open wire configuration and the spaces around the products.

The cooling air flow rate is preferably in the range of 2.5m/s to 4.0 m/s, and as noted above a rate of about 3.5m/s has been found to be particularly effective.

While the super-chilling air temperature is in this case -28°C, it is envisaged that it may be advantageously elsewhere in the range of -25°C to -30°C.

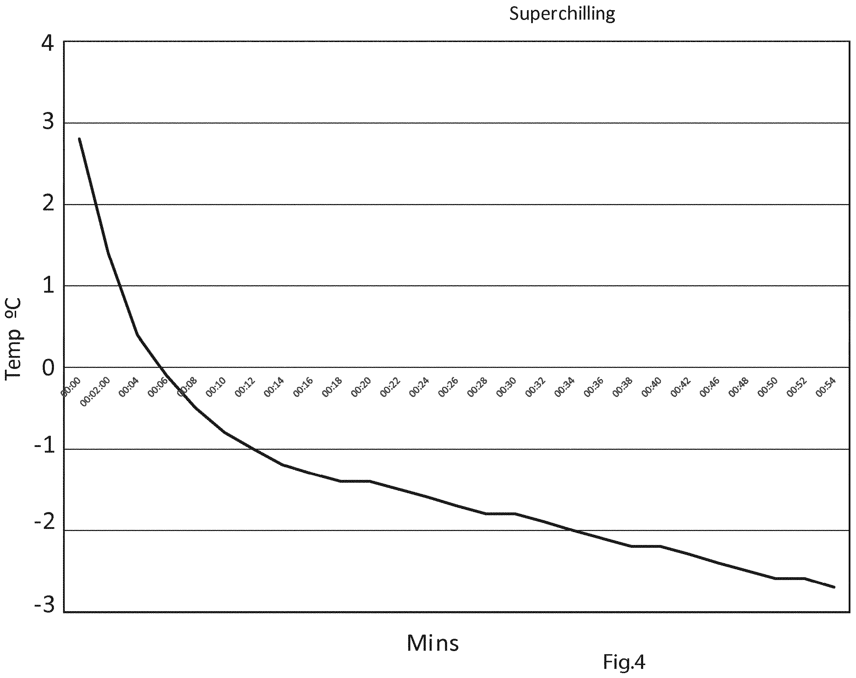

Fig. 4 illustrates an example temperature profile for a duration of approximately one hour, showing a reduction in product core temperature from about 2° C to about -2.7°C during this period. These measurements were made with measured by a temperature recorder of type having a needle probe inserted in the product and a lead to an external data logger which travels with the product. In this case the recorder used was a LogTag^{®} TRED30-7 temperature recorder.

The heat exchanger 250 has a 355kW compressor and the fan has a 30kW rating with a speed of 2800 rpm to deliver air at a temperature of -28°C at 3.5 metres per second. By using a spiral chiller, each portion of fish has good contact with the super cold air being supplied to chill the fish.

The packaged fish is then transferred to a holding room where the room temperature is preferably approximately -4°C, but can be elsewhere in the range of -6°C to -1°C. This is to provide wait time before the product is required to be transported to retailers.

Finally, the product is transported to the retailers. It is in a chilled environment of approximately 0 to 2°C. The transport chilling and retail chilling arrangements are conventional for chilled products. However, due to the overall process described above an extended shelf life of up to 12 days is achieved, without need for any special transport, retail storage, or product container requirements.

It has been found by the inventors that by using this process, the shelf-life of the fish can increase to up to 12 days from the point of intake. This is a significant improvement on the current industry standard of approximately 9 days.

Further, the inventors have found that they are able to achieve this level of shelf-life and freshness with an environment temperature of less than or equal to 8°C for several of stages. This provides a better work environment for employees without compromising on the quality of the produce. Referring again to Figs. 4, this illustrates the fish core temperature profile during super-chilling, showing the effectiveness of the super-chilling stage. This is at the core of the overall process. However, the other stages are particularly advantageous in combination, especially:
Initial QC, filleting, and chill room.
Production tray storage in range of -1°C to + 1 °C.
Sealing individual portions. This is effective since the sealing is skin sealing as described, with a pressure of less than 5mBar to provide the final end product configuration at this early stage in the process.
Super-chilling with air at about -28°C to achieve a fish core temperature of -4°C to -2°C, while in the end-product packaging.
Chill hold environment of -6°C to -1°C before transport to the retailer.

Due to the above process, the transport and retailer handling chill requirements are conventional, and an extended shelf life of up to 12 days is achieved.

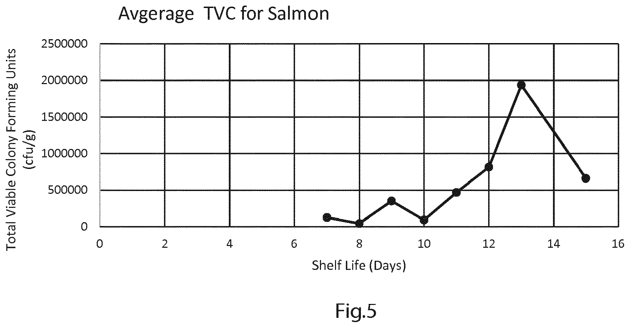

Referring to Fig. 5 this illustrates graphically the quality of the fish product over this shelf life. The vertical axis is Total Viable Colony Forming Units From this it will be seen that the bacterial count is kept very low over this extended period. This plot of data was obtained based on results averaged from a cumulative total of 19 samples, using ISO4833-1:2013 (Microbiology of the food chain - Horizontal method for the enumeration of microorganisms - Part 1 :Colony count at 30°C by the pour plate technique.

In practical terms, this means that the product may be processed at a location such as the west of Ireland, near the port of landing, and shipped abroad to retailers in Europe.

The invention is not limited to the embodiments described but may be varied in construction and detail.

## Claims

1. A process for treating and packaging fish comprising the steps of:
(a) receiving (1) and inspecting fish at a point of intake;
(b) chilling (3) the fish by transferring the fish to a chill room with an environment temperature in the range of 0°C to 2°C;
(c) fileting and portioning (4) the fish to provide fish portions;
(d) holding (6) the portions in bulk production trays in an environment of -1°C to +1°C;
(e) packing (7) one or more of the portions to provide a package which is vacuum skin sealed (8, 101), wherein the portions are vacuum skin packed by placing the portions in a retail individual-product tray and covered with a skin film, and sealing with a vacuum pressure of less than 5mBar, and repeating said packing steps for a plurality of packages, wherein the portions are vacuum skin packed within 10 minutes of leaving the chill environment of step (d);
(f) in a super-chill stage (9, 200), chilling said packages in order to reach a fish core temperature in the range of -4°C to -2°C during a time duration in the range of 45mins to 180mins, the super-chilling being implemented by delivering air with a temperature in the range of -25°C to -30°C to the packages for said duration;
(g) storing (10) the packages in a chill hold environment at a temperature of -6°C to - 1°C; and
(h) despatching the packages as fish products for transport to retailers wherein the super-chilled fish packages are transported, after step (h), in a chilled environment with a temperature in the range of approximately 0°C to 2°C.

2. A process as claimed in claim 1, wherein for step (c) the fish is transferred to a fileting stage from the chill room, wherein the fish is fileted in said fileting stage in a room environment temperature of less than or equal to 8°C.

3. A process as claimed in claim 2, wherein for step (c) the fish is transferred to a portioning stage from the fileting stage, wherein the fish is portioned in a portioning stage room environment temperature of less than or equal to 8°C.

4. A process as claimed in any preceding claim, wherein the super-chilling of step (f) is implemented by delivering air to the fish for a cycle time of approximately 60 minutes.

5. A process as claimed in claim 4, wherein the super-chill air is delivered at approximately - 28°C.

6. A process as claimed in any preceding claim, wherein the super-chill stage is implemented in a spiral chilling chamber, having a closed environment (220) within which air is circulated vertically through a spiral-mesh open conveyor holding the packages and is cooled by a heat exchanger (250) which draws air in and delivers it between heat exchanger or evaporator plates.

7. A process as claimed in claim 6, wherein the coolant for the heat exchanger or evaporator coolant is ammonia, and the coolant temperature is in the range of -30°C to -38°C.

8. A process as claimed in any preceding claim, wherein the cooling air flow rate is in the range of 2.5m/s to 4.0 m/s.

9. A process as claimed in any preceding claim, wherein the chill hold environment temperature of step (g) is approximately -4°C.

10. A process as claimed in any preceding claim, wherein for step (g) the packages are held in the holding room for approximately 20 to 30 hours.

## Patentansprüche

1. Verfahren zum Behandeln und Verpacken von Fisch, das die folgenden Schritte umfasst:
(a) Empfangen (1) und Inspizieren von Fisch zu einem Zeitpunkt der Aufnahme;
(b) Kühlen (3) des Fisches durch Überführen des Fisches zu einem Kühlraum mit einer Umgebungstemperatur in dem Bereich von 0 °C bis 2 °C;
(c) Filetieren und Portionieren (4) des Fisches, um Fischportionen bereitzustellen;
(d) Aufbewahren (6) der Portionen in Massenproduktionsschalen in einer Umgebung von -1 °C bis +1 °C;
(e) Verpacken (7) von einer oder mehreren der Portionen, um eine Packung bereitzustellen, die Vakuum-Skin-verschlossen ist (8, 101), wobei die Portionen durch Folgendes Vakuum-Skin-verpackt werden: Platzieren der Portionen in eine Einzelhandel-individuelle Produktschale und Bedecken mit einer Skin-Folie und Verschließen mit einem Vakuumdruck von weniger als 5 mbar und Wiederholen der Verpackungsschritte für eine Vielzahl von Packungen, wobei die Portionen innerhalb von 10 Minuten nach Verlassen der Kühlumgebung von Schritt (d) Vakuum-Skin-verpackt werden;
(f) in einer Superkühlphase (9, 200) Kühlen der Packungen, um eine Fischkerntemperatur in dem Bereich von -4 °C bis -2 °C während einer Zeitdauer in dem Bereich von 45 min bis 180 min zu erreichen, wobei das Superkühlen durch Zuführung von Luft mit einer Temperatur in dem Bereich von -25 °C bis -30 °C zu den Packungen für die Dauer umgesetzt wird;
(g) Lagern (10) der Packungen in einer Kühlhaltungsumgebung bei einer Temperatur von -6 °C bis -1 °C; und
(h) Versenden der Packungen als Fischprodukte zum Transport zu Einzelhändlern, wobei die supergekühlten Fischpackungen nach Schritt (h) in einer gekühlten Umgebung mit einer Temperatur in dem Bereich von ungefähr 0 °C bis 2 °C transportiert werden.

2. Verfahren nach Anspruch 1, wobei für Schritt (c) der Fisch zu einer Filetierungsphase aus dem Kühlraum überführt wird, wobei der Fisch in der Filetierungsphase bei einer Raumumgebungstemperatur von weniger als oder gleich 8 °C filetiert wird.

3. Verfahren nach Anspruch 2, wobei für Schritt (c) der Fisch zu einer Portionierungsphase von der Filetierungsphase überführt wird, wobei der Fisch bei einer Raumumgebungstemperatur der Portionierungsphase von weniger als oder gleich 8 °C portioniert wird.

4. Verfahren nach einem vorstehenden Anspruch, wobei das Superkühlen von Schritt (f) durch Zuführung von Luft zu dem Fisch für eine Zykluszeit von ungefähr 60 Minuten umgesetzt wird.

5. Verfahren nach Anspruch 4, wobei die Superkühlluft bei ungefähr -28 °C zugeführt wird.

6. Verfahren nach einem vorstehenden Anspruch, wobei die Superkühlphase in einer Spiral-Kühlkammer umgesetzt wird, die eine geschlossene Umgebung (220) aufweist, innerhalb der Luft vertikal durch einen offenen Förderer aus Spiralgeflecht zirkuliert wird, der die Packungen trägt, und durch einen Wärmetauscher (250) gekühlt wird, der Luft einzieht und sie zwischen Wärmetauscher oder Verdampferplatten zuführt

7. Verfahren nach Anspruch 6, wobei das Kühlmittel für den Wärmetauscher oder Verdampferkühlmittel Ammoniak ist und die Kühlmitteltemperatur in dem Bereich von -30 °C bis -38 °C liegt.

8. Verfahren nach einem vorstehenden Anspruch, wobei die Flussrate der Kühlungsluft in dem Bereich von 2,5 m/s bis 4,0 m/s liegt.

9. Verfahren nach einem vorstehenden Anspruch, wobei die Umgebungstemperatur der Kühlhaltung von Schritt (g) ungefähr -4 °C beträgt.

10. Verfahren nach einem vorstehenden Anspruch, wobei für Schritt (g) die Packungen in dem Aufbewahrungsraum für ungefähr 20 bis 30 Stunden aufbewahrt werden.

## Revendications

1. Procédé de traitement et d'emballage de poisson, comprenant les étapes :
(a) de réception (1) et d'inspection du poisson au niveau d'un point de réception ;
(b) de refroidissement (3) du poisson par son transfert dans une chambre froide dont la température d'environnement se trouve dans la plage allant de 0°C à 2°C ;
(c) de filetage et de portionnement (4) du poisson afin de fournir des portions de poisson ;
(d) de maintien (6) des portions dans des barquettes de production en vrac dans un environnement de -1°C à + 1°C ;
(e) d'emballage (7) d'une ou plusieurs parmi les portions afin d'obtenir un emballage qui est scellé par pellicule sous vide (8, 101), les portions étant emballées par pellicule sous vide en les plaçant dans une barquette de produit individuel au détail et en les recouvrant d'un film de type pellicule, et en les scellant avec une pression sous vide inférieure à 5 mbar, et en répétant lesdites étapes d'emballage pour une pluralité d'emballages, les portions étant emballées par pellicule sous vide dans les 10 minutes suivant leur sortie de l'environnement réfrigéré de l'étape (d) ;
(f) dans une étape de super-refroidissement (9, 200), de refroidissement desdits emballages afin d'atteindre une température au coeur du poisson dans la plage allant de - 4°C à -2°C pendant une durée dans la plage allant de 45 minutes à 180 minutes, le super-refroidissement étant mis en oeuvre en envoyant de l'air à une température dans la plage allant de -25°C à -30°C dans les emballages pendant ladite durée ;
(g) de stockage (10) des emballages dans un environnement de maintien réfrigéré à une température allant de -6°C à -1°C ; et
(h) d'expédition des emballages en tant que produits de poissonnerie pour un transport vers les détaillants, les emballages de poisson super réfrigérés étant transportés, après l'étape (h), dans un environnement réfrigéré à une température dans la plage allant d'environ 0°C à 2°C.

2. Procédé selon la revendication 1, dans lequel, à l'étape (c), le poisson est transféré de la chambre froide vers une étape de filetage, dans laquelle le poisson est fileté dans ladite étape de filetage à une température d'environnement ambiant inférieure ou égale à 8°C.

3. Procédé selon la revendication 2, dans lequel, à l'étape (c), le poisson est transféré de l'étape de filetage vers une étape de portionnement, dans laquelle le poisson est mis en portions à une température d'environnement ambiant d'étape de portionnement inférieure ou égale à 8°C.

4. Procédé selon l'une quelconque des revendications précédentes, dans lequel le super-refroidissement de l'étape (f) est mis en oeuvre en délivrant de l'air au poisson pendant une durée de cycle d'environ 60 minutes.

5. Procédé selon la revendication 4, dans lequel l'air de super réfrigération est délivré à environ -28°C.

6. Procédé selon l'une quelconque des revendications précédentes, dans lequel l'étape de super-réfrigération est mise en oeuvre dans une chambre de refroidissement en spirale, dotée d'un environnement fermé (220) au sein duquel de l'air circule verticalement à travers un convoyeur ouvert à mailles en spirale contenant les emballages et est refroidi par un échangeur de chaleur (250) qui aspire l'air et le fait circuler entre des plaques d'échangeur de chaleur ou d'évaporateur.

7. Procédé selon la revendication 6, dans lequel le liquide de refroidissement de l'échangeur de chaleur ou de l'évaporateur est constitué d'ammoniaque, et la température du liquide de refroidissement se trouve dans la plage allant de -30°C à - 38°C.

8. Procédé selon l'une quelconque des revendications précédentes, dans lequel le débit d'air de refroidissement se trouve dans la plage allant de 2,5 m/s à 4,0 m/s.

9. Procédé selon l'une quelconque des revendications précédentes, dans lequel la température d'environnement de maintien réfrigéré de l'étape (g) est d'environ -4°C.

10. Procédé selon l'une quelconque des revendications précédentes, dans lequel, pour l'étape (g), les emballages sont maintenus dans la chambre de conservation pendant d'environ 20 à 30 heures.
